Europäisches Patentamt

European Patent Office

Office européen des brevets

(19)

(11) Publication number: **0 343 657**
A1

## (12) EUROPEAN PATENT APPLICATION

(21) Application number: **89109430.2**

(22) Date of filing: **24.05.89**

(51) Int. Cl.⁴: **C08F 8/22 , C08L 27/06 ,**
**//(C08L27/06,23:28)**

(30) Priority: **26.05.88 US 198902**

(43) Date of publication of application:
**29.11.89 Bulletin 89/48**

(84) Designated Contracting States:
**BE DE FR GB IT NL SE**

(71) Applicant: **THE DOW CHEMICAL COMPANY**
**2030 Dow Center, Abbott Road**
**Midland MI 48640(US)**

(72) Inventor: **Alle, Narasaiah**
**4729 Tartan Drive**
**Baton Rouge Louisiana 70816(US)**

(74) Representative: **Huber, Bernhard, Dipl.-Chem.**
**et al**
**Möhlstrasse 22 Postfach 860 820**
**D-8000 München 86(DE)**

(54) **Method for preparing chlorinated polyethylene suitable for blending with polyvinyl chloride to produce articles of manufacture having good impact resistance and clarity.**

(57) A two-stage aqueous slurry chlorination process which employs a constant gaseous chlorine flow rate and a temperature which increases from an initial chlorination temperature of 100°C to a line-out chlorination temperature of from 116° to 128°C in the first stage and remains at the line-out temperature in the second stage. The process produces CPE resins having a chlorine content of from 43 to 55 %bw of polymer. Polymer blends of such CPE resins with PVC resins provide impact strength improvements in comparison to the PVC resin alone and transparency which approaches or equals that of unmodified PVC resins.

EP 0 343 657 A1

# METHOD FOR PREPARING CHLORINATED POLYETHYLENE SUITABLE FOR BLENDING WITH POLYVINYL CHLORIDE TO PRODUCE ARTICLES OF MANUFACTURE HAVING GOOD IMPACT RESISTANCE AND CLARITY

This invention generally concerns a method for preparing chlorinated polyethylene (CPE) resins suitable for blending with polyvinyl chloride (PVC) resins to produce articles of manufacture having good impact resistance and clarity. The present invention also concerns blends of said CPE resins with vinyl chloride polymer resins.

McGinley (U.S. 3,356,634) incorporates, in a highly filled vinyl chip or particle formulation, from 5 to 35 %bw (percent by weight) of total resin binder of a CPE having a chlorine content of from 30 to 55 %bw, preferably from 40 to 50 %bw, and a high weight average molecular weight of 700,000 to 5,000,000 to eliminate smearing or undesirable distortion of the particles or chips in decorative vinyl flooring products. The CPE also has a crystallinity of from 5 to 35 percent, as measured by differential thermal analysis. The balance of resin binder is a conventional vinyl chloride polymer. Chlorination temperatures used to produce the CPE's range from 80°C to 120°C.

Frey et al. (U.S. 3,291,863) disclose blends of vinyl chloride polymers with chlorinated olefin polymers of high molecular weight. The olefin polymers are substantially chlorinated at a low temperature of from 60°C to 90°C, then chlorinated in a final phase at a temperature of from 110°C to 150°C.

Frey et al. (U.S. 3,165,560) teach that high density polyethylenes, chlorinated in water at a temperature above 90°C to 100°C, but not above 150°C, produce excellent effects when mixed with vinyl chloride polymers.

Japanese Publication J5 1143-053 discloses blends of a vinyl chloride resin and a crystalline CPE resin prepared by chlorinating high density polyethylene, in aqueous emulsion, at a temperature of from 105°C to 115°C to a chlorine content of not more than 35 %bw and then chlorinating at 90°C to 105°C until a final chlorine content of up to 50 %bw is obtained.

Chem Abstracts 14,909q discloses blends of PVC and a CPE containing from 20 to 45 %bw chlorine. The CPE is prepared by chlorinating high density polyethylene at temperatures below 90°C. The blends are said to have good transparency and impact strength.

Eckardt et al. (U.S. 3,563,974) disclose a process for chlorinating a linear polymer of ethylene, in an aqueous slurry, to obtain a highly extensible, amorphous product having a chlorine content of from 30 to 50 %bw Their process requires tipping, or adding from 1 to 15 %bw of the desired chlorine content, at a temperature of at least 130°C after most of the desired chlorine content has been attained.

Busch et al. (U.S. 4,562,224) disclose chlorination of polyethylene in the presence of a dispersing agent system of poly-N-vinylpyrrolidone and hydrophobic silicic acid. In Example 1, they begin chlorination at a temperature of 120°C.

McGinley (U.S. 3,401,129) discloses a plasticized and highly filled vinyl composition suitable for use in manufacturing floor covering. The composition comprises a vinyl polymer, filler, plasticizer and a chlorinated linear polyethylene. The CPE has a chlorine content of from 35 to 55 %bw and a relative crystallinity of from 8 to 35 percent as measured by differential thermal analysis. The molecular weight of the polyethylene starting material is from 700,000 to 5,000,000. Chlorination of the polyethylene occurs at temperatures of from 80°C to 120°C with hourly rates of chlorine addition of from 0.05 to 0.5 pound of chlorine per pound of polyethylene.

Frey (U.S. 3,006,889) discloses blends of vinyl chloride polymers with chlorinated polyolefins having a chlorine content of from 20 to 60 %bw. Preparation of the chlorinated polyolefins is not disclosed.

Reventas et al. (U.S. 3,338,852) disclose highly filled, plasticized CPE/PVC floor covering compositions. The CPE must have a chlorine content of greater than 40 and less than 70 %bw and be prepared from high density polyethylene having a molecular weight of from 1,000,000 to 5,000,000. The CPE is amorphous and is prepared in a two-stage, aqueous slurry process. In the first stage, from 5 to 17 %bw of chlorine is added at a temperature below the crystalline melting point of the polyethylene. In the second stage, chlorination is continued at a temperature of from 135°C to 145°C.

Nolte et al. (U.S. 3,035,038) disclose chlorination of high density polyethylene in a mixture of water and solvent at a temperature of from 100°C to 150°C. They prefer superatmospheric.

Although blends of CPE/PVC are disclosed in several of the foregoing references, it would be desirable if the impact strength, transparency and weatherability of such blends could be improved. It would also be desirable if a CPE material were available which could provide these improvements.

One aspect of the present invention is an aqueous slurry process for preparing a CPE resin comprising the steps of: (a) adding gaseous chlorine to an agitated and heated aqueous suspension of a particulate dispersant, a surfactant and a polyethylene resin, the resin having a density of from 0.935 to 0.965 grams per cubic centimeter (g/cm³) and a melt flow index of from 0.05 to 8 grams per ten minutes, the chlorine being added at a constant flow rate and for a period of time sufficient to provide a partially chlorinated polymer having a chemically combined chlorine content of from 10 to 25 %bw of polymer, the suspension being heated from an initial chlorination temperature of about 100°C to a final chlorination temperature of from 116°C to 128°C; and (b) continuing the flow of gaseous chlorine at the constant flow rate while maintaining the temperature of the suspension at the final chlorination temperature to provide a final chemically combined chlorine content of from 43 to 55 %bw of polymer, preferably from 45 to 50 %bw.

A related aspect of the present invention is a thermoplastic polymer blend composition comprising: (a) from 70 to 95 %bw, based upon composition weight, of a vinyl chloride polymer resin having a K value of from 50 to 75; and (b) from 5 to 30 %bw, based upon composition weight, of the CPE resin prepared as described in the preceding paragraph. The CPE resin has a chemically combined chlorine content of from 43 to 55 %bw, based upon the total weight of the CPE polymer, and a heat of fusion of from greater than 0 to 10 calories per gram. It is prepared from a polyethylene resin having a density of from 0.935 to 0.965 g/cm³ and a melt flow index of from 0.05 to 8 grams per ten minutes.

The thermoplastic polymer blend compositions of the present invention suitably include from 70 to 95 %bw, based upon the total weight of the composition, of a vinyl chloride polymer resin having a K value of from 50 to 75. The amount of vinyl chloride polymer resin is beneficially from 75 to 95, preferably from 80 to 95, and more preferably from 85 to 95 %bw, based upon the total weight of the composition. The K value is beneficially from 55 to 65 and preferably from 55 to 60.

If the K value falls below about 50, the compositions are believed to be too brittle for practical use. If the K value exceeds about 80, the compositions lack processability due to excessive viscosity when compared to resins having a K value of from 55 to 60.

Although the vinyl chloride homopolymer, PVC, is preferred, suitable results are obtained with copolymers of vinyl chloride and one or more monomers copolymerizable therewith. Examples of suitable comonomers include olefins such as ethylene or propylene; vinyl esters of straight chain or branched carboxylic acids having from 2 to 20, preferably from 2 to 4, carbon atoms, such as vinyl acetate, propionate, butyrate, 2-ethyl hexanoate, or stearate; vinyl halides such as vinyl fluoride, vinylidene chloride or bromide; vinyl ethers such as vinylmethyl ethers; vinyl pyridine; unsaturated acids, such as maleic, fumaric, acrylic, methacrylic acid and their mono- or diesters with mono- or dialcohols having of from 1 to 10 carbon atoms; maleic acid anhydride and maleic acid imide. Mixtures of these monomers may also be used.

The thermoplastic polymer blend compositions also include from 5 to 30 %bw of a CPE resin having a chemically combined chlorine content of from 43 to 55 %bw, based upon weight of CPE polymer. The CPE resin also has a heat of fusion of from 0 to 10 calories per gram. It is prepared from a polyethylene resin having a density of from 0.935 to 0.965 g/cm³ and a melt flow index of from 0.05 to 8 grams per ten minutes (ASTM D-1238, condition E). The amount of CPE is preferably from 5 to 25, and more preferably from 15 to 20, and most preferably from 5 to 15 %bw of blend composition. The chemically combined chlorine content is most preferably from 45 to 48 %bw of polymer.

The polyethylene resin (homopolymer) suitably has a weight-based median particle size of from 120 to 600 microns, a weight-based particle size distribution wherein more than 60 %bw of the particles have a particle size of from 130 to 850 microns, and a bulk density of from 0.26 to 0.56 g/cm³. The polyethylene desirably has a density of from 0.958 to 0.965 g/cm³. The weight-based median particle size is preferably from 120 to 450 microns. The weight-based particle size distribution is preferably such that more than 60 %bw of the particles have a size of from 130 to 500 microns, more preferably from 130 to 425 microns.

As used herein, the term "ethylene polymer" means interpolymers of ethylene having polymerized therein ethylene and at least one of a 1-olefin monomer copolymerizable therewith. The total amount of the 1-olefin monomer is suitably from 1 to 5 %bw, based upon interpolymer weight, preferably from 1.2 to 3.5 %bw. The total amount may comprise one or more 1-olefin monomers. Suitable 1-olefin monomers include 1-butene and 1-octene.

Ethylene polymer resins suitable for purposes of the present invention desirably meet four criteria. One criterion is a weight-based median particle size of from 120 to 600 microns, preferably from 120 to 450 microns. A second criterion is a weight-based particle size distribution in which more than about 60 %bw of the particles have a size of from 130 to 850 microns, preferably from 130 to 500 microns, more preferably from 130 to 425 microns. A third criterion is a bulk density of from 0.25 to 0.60 g/cm³. A fourth criterion is a density of from 0.935 to 0.950 g/cm³.

Polyethylene resins and ethylene polymer resins meeting the aforementioned criteria are beneficially prepared under conditions characteristic of Ziegler polymerization in the presence of a transition metal-containing catalyst and at least one cocatalyst or activator. U.S. Patent No. 4,526,943 (Fuentes, Jr. et al.) discloses a process of polymerization.

The transition metal-containing catalyst is suitably prepared in accordance with U.S. Patent No. 4,544,647 (Fuentes, Jr. et al.) or U.S. Patent No. 4,456,547 (Fuentes, Jr.). The transition metal-containing catalyst is beneficially prepared in accordance with U.S. Patent No. 4,661,465 (Fuentes, Jr. et al.).

The thermoplastic polymer blends of the present invention, when fabricated into an article having an effective thickness of about 1.3 mm, has a transparency (ASTM D 1003-61) of from 85 to 99 percent of that obtained from a like article fabricated with PVC as the sole resin component. The same articles, when subjected to impact tests according to ASTM D 3029-82 (Method G) have mean failure energy values, in joules which are suitably at least 30, preferably at least 40, and more preferably at least 50 percent greater than values obtained for PVC alone.

The CPE resins of the present invention are suitably prepared in a two-stage process. In a first stage, a suspension of the polyethylene starting material, a dispersant such as talc and a surfactant are heated, with stirring, from an initial temperature of about 100°C to a final temperature within a range of from 116°C to 128°C while adding gaseous chlorine at a constant rate to attain a chlorine content of from 10 to 25 %bw, preferably from 15 to 20 %bw, of polymer. At final temperatures of less than 116°C, the heat of fusion (Hf) increases to an unacceptable level, pressure within the reactor reaches or exceeds safe operating limits and the reaction proceeds at an uneconomically slow rate. At final temperatures in excess of 128°C, heat transfer problems occur, and CPE particles become so soft that they tend to stick together. The rate of gaseous chlorine addition is suitably from 5 to 10, preferably from 5.5 to 8, more preferably from 6.0 to 7, and most preferably about 6.5 kg/hr. Chlorine addition rates of less than 5 and greater than 10 kg/hr pose problems. At less than 5 kg/hr, the reaction time becomes economically impractical and the resin particles tend to agglomerate or coalesce into large masses. At greater than 10 kg/hr, pressure buildup in the reactor exceeds safe operating limits. In the second stage, gaseous chlorine is continued at the same constant rate and the temperature is maintained at the final chlorination temperature until a final chlorine content of from 43 to 50 %bw is attained. The final chlorine content is preferably from 45 to 48 %bw of polymer. Chlorine contents of less than 43 %bw of polymer demonstrate reduced transparency and those above 50 %bw of polymer exhibit brittleness similar to that of PVC and undesirably low impact strengths.

The thermoplastic polymer blend compositions may also contain known processing auxiliaries such as heat or light stabilizers, UV absorbers, dyestuffs, pigments and antistatic agents.

Tin compounds, suitable for use as heat or light stabilizers, include mono- or dialkyl tin compounds having from 1 to 10 carbon atoms in the alkyl radical, wherein the remaining valences of the tin are saturated by oxygen or sulfur atoms or both or by radicals containing oxygen or sulfur or both. Dibutyl tin bis-thioglycolic acid octyl ester is one example of a suitable compound.

Lead compounds, such as salts with organic acids, e.g., aliphatic carboxylic acids or hydroxy-carboxylic acids, as well as with mineral acids, e.g., basic or neutral lead salts of sulfuric or phosphorous acid, also function as heat or light stabilizers. Other suitable stabilizers include salts of the alkaline earth metals as well as of zinc, barium and cadmium with aliphatic carboxylic acids or hydroxycarboxylic acids, e.g., the known barium/cadmium laurates, amino-crotonic acid esters, urea and thiourea derivatives, such as monophenyl urea and diphenyl thiourea. Alpha-phenylindol and epoxides, e.g., epoxidized soy bean oil, also function as stabilizers.

The stabilizers are preferably added in an amount of from 0.2 to 5 %bw, based upon total mixture weight. They may also be used in admixture with one another as well as with antioxidants such as bisphenol A or alkyl substituted hydroxyl compounds.

Illustrative ultraviolet light stabilizers include benzophenone or benzotriazol derivatives, such as 2-(2'hydroxy-5' methylphenyl)-benzotriazol or 2-(2'hydroxy-3' tertiary-butyl-5' methylphenol)-5-chloro-benzotriazol.

Illustrative lubricants include one or more higher aliphatic carboxylic acids and hydroxycarboxylic acids as well as their esters and amides, e.g., stearic acid, glycerin monooleate, bis-stearyl or bis-palmitoyl ethylenediamine; fat alcohols having more than 10 carbon atoms, as well as their ethers; low molecular weight polyolefins; and hard paraffins. Lubricants are advantageously used in amounts of from 0.1 to 6 %bw, on total mixture weight.

Suitable pigments include titanium dioxide and barium sulfate. Other heat resistant mineral and organic pigments may also be used.

The thermoplastic polymer blend compositions may be used, depending on the proportion of the chlorinated polyethylene, for making profiles, plates, sheets, injection molded parts and other shaped articles. By virtue of the homogeneity of its fine grain, the CPE prepared as described herein may be readily processed by dry blend techniques. Mixing of the components in the plasticated state may be dispensed with. The blends are used in cases where a good transparency and resistance to impact are required.

The following examples are furnished by way of illustration only and are not to be construed as limiting the scope of the present invention. All parts and percentages are by weight unless otherwise specified.

## Preparation of Chlorinated Polyethylene (CPE)

In a 155 L chlorination vessel, add 9 kg of high density polyethylene, 85.9 kg of water, 25 mL of surfactant and 100 g of talc with stirring while evacuating the air from the vessel. The polyethylene has a melt index (ASTM D-1238, Condition E) of 0.2 g/10 minutes, a density of 0.958 $g/cm^3$, a heat of fusion, as measured by differential scanning calorimetry, of 43 calories/g, and a peak melting point of $137°C$. The surfactant is an ethoxylated nonyl phenol (9.5 mole ethylene oxide) commercially available from Thompson Hayward Chemical Company under the trade designation T-detTMN-9.5. The suspension is heated to $100°C$ and addition of 4.55 kg of gaseous chlorine at a rate of 6.54 kg/hr is started while stirring is continued. While continuing stirring and the addition of gaseous chlorine, the temperature is increased from $100°C$ to $122°C$ at a rate of $1.9°C/minute$ and then maintained at $122°C$ until a chlorine content of 20 %bw is reached. During the first stage chlorination, a suspension of 100 g of talc in 2 kg of water is injected into the chlorine vessel when the temperature reaches $115°C$ in order to control particle size. In the second stage chlorination, the reaction temperature is maintained at $122°C$ until a desired final chlorine content is reached.

After cooling the reaction mixture to $90°C$, the CPE is separated from residual hydrochloric acid (HCl) by hot water washing several times in a washing tank. The acid-free wet CPE is filtered with an expressor and dried at a temperature of from $60°C$ to $70°C$ in a fluid bed dryer until the moisture content in the product is less than 0.2 percent. By controlling the chlorination temperatures and the level of chlorine added in the second stage chlorination step, various CPE's having chlorine contents of from 30 to 50 percent and heats of fusion of from 0 to 9 cal/g are obtained as indicated in Tables I and II. The following formulation is used to prepare samples for transparency and impact strength measurements which are also shown in Tables I and II.

| | | |
|---|---|---|
| PVC[1] | : | 100 parts |
| CPE | : | 5 or 10 parts per 100 parts PVC (phr) |
| Heat Stabilizer[2] | : | 2.5 phr |
| Lubricant[3] | : | 1.5 phr |
| Processing Aid[4] | : | 1.5 phr |
| UV Stabilizer[5] | : | 0.3 phr |

[1] A resin having a K value of 55 and being commercially available from Georgia Gulf under the trade designation 2066.

[2] Butyl tin mercaptide commercially available from M&T Chemical under the trade designation T-133.

[3] A proprietary blend of mixed glycerol esters commercially available from Henkel under the trade designation Loxiol HOB 7111.

[4] A polymethyl methacrylate processing aid commercially available from Rohm & Haas under the trade designation ParaloidTM K-175.

[5] A benzotriazole UV stabilizer commercially available from Ciba-Geigy under the trade designation TINUVINTM 328.

Blends prepared in accordance with the formulation are rolled at a temperature of $180°C$ on a heated two-roll mill for 5 minutes. Plates having a thickness of 1.3 mm are molded from the roll milled rough sheets. The molded plates are used for measuring the percentage of haze and percentage of transmittance by Hunterlab D-25-9 calorimeter (ASTM D-1003-61 test method). Percentages are shown in Tables I and II. The same sheets are used to determine mean failure energy (ASTM D-3029-82 test method) in joules. The energy determinations are shown in Tables I and II.

EP 0 343 657 A1

TABLE I

| EFFECT OF CHLORINE LEVEL ON TRANSPARENCY AND MEAN FAILURE ENERGY** | | | | |
|---|---|---|---|---|
| CPE* Chlorine Level (%) | Amount of CPE in PVC (phr) | TRANSPARENCY | | MEAN FAILURE ENERGY (Joules) |
| | | Haze (%) | Transmittance (%) | |
| 30 | 5 | 23.5 | 80.5 | 18.5 |
| | 10 | 51.0 | 71.5 | 20.8 |
| 35 | 5 | 16.5 | 84.3 | 18.5 |
| | 10 | 35.0 | 75.3 | 19.6 |
| 40 | 5 | 13.0 | 84.9 | 18.5 |
| | 10 | 35.0 | 77.4 | 19.6 |
| 42 | 5 | 12.0 | 85.9 | 18.5 |
| | 10 | 24.0 | 81.2 | 18.5 |
| 46 | 5 | 8.0 | 89.5 | 18.5 |
| | 10 | 13.0 | 87.6 | 18.5 |
| 47 | 5 | 7.0 | 89.5 | 18.5 |
| | 10 | 13.0 | 87.6 | 18.5 |
| 48 | 5 | 5.0 | 90.0 | 18.5 |
| | 10 | 6.5 | 89.2 | 18.5 |
| 49 | 5 | 4.5 | 90.4 | 18.5 |
| | 10 | 5.5 | 90.0 | 18.5 |
| 50 | 5 | 4.5 | 90.7 | 18.5 |
| | 10 | 5.5 | 90.4 | 18.5 |
| UNMODIFIED PVC | 0 | 4.5 | 91.0 | 11.6 |

*All CPE resins have heat of fusion less than 0.5 cal/g.
**Sample thickness = 1.3 mm.

6

TABLE II

| EFFECT OF CHLORINE AND RESIDUAL HEAT OF FUSION OF CPE RESINS ON TRANSPARENCY AND MEAN FAILURE ENERGY IN PVC/CPE*** THERMOPLASTIC COMPOSITIONS** | | | | |
|---|---|---|---|---|
| CPE Chlorine level (%) | CPE Heat of Fusion (cal/g) | TRANSPARENCY | | MEAN FAILURE ENERGY (Joules) |
| | | Haze (%) | Transmittance (%) | |
| 35 | 0 | 35.0 | 75.3 | 19.6 |
| | 5 | 26.5 | 79.7 | 18.5 |
| | 9 | 15.0 | 84.7 | 16.2 |
| 42 | 0 | 24.0 | 81.2 | 18.5 |
| | 5 | 15.0 | 84.2 | 17.4 |
| | 9 | 8.5 | 88.5 | 16.2 |
| 46 | 0 | 13.0 | 87.0 | 18.5 |
| | 2 | 11.5 | 87.8 | 18.5 |
| | 5 | 11.5 | 87.8 | 17.4 |
| 50 | 0 | 5.5 | 90.0 | 18.5 |
| | 2 | 5.5 | 90.0 | 18.5 |
| Unmodified PVC | * | 4.5 | 91.0 | 11.6 |

*No CPE.
**Sample thickness: 1.3 mm.
***Amount of CPE in PVC: 10 phr.

The data presented in Table I shows that optimum transparency occurs in the PVC/CPE thermoplastic compositions when the CPE has a high chlorine level of from 46 to 50 %bw. When the CPE component has that level of chlorine, mean failure energy measurements, an indication of the composition's resistance to impact, all equate to 18.5 joules whereas the mean failure energy value for PVC is only 11.6 joules. In other words, the data in Table I demonstrates the effect of varying the chlorine content of the CPE. Similar results are attainable with other blend compositions having amounts of CPE as high as 30 %bw of composition.

The data presented in Table II show that increasing the heat of fusion of the CPE has a beneficial effect upon transparency at the expense of a limited decrease in mean failure energy. Similar results are obtained with other blends and CPE resins prepared as herein described.

## Claims

1. A thermoplastic polymer blend composition comprising: (a) from 70 to 95 %bw (percent by weight), based upon composition weight, of a vinyl chloride polymer resin having a K value of from 50 to 75; and (b) from 5 to 30 %bw, based upon composition weight, of a chlorinated polyethylene (CPE) resin having a chemically combined chlorine content of from 43 to 50 %bw, based upon weight of CPE polymer, and a heat of fusion of from 0 to 10 calories per gram, said CPE resin being prepared from polymeric resins selected from homopolymers of ethylene, ethylene polymers, or mixtures thereof, said polymeric resins having a density of from 0.935 to 0.965 calories per gram and a melt flow index of from 0.05 to 8 grams per 10 minutes.

2. The composition of Claim 1, wherein the vinyl chloride polymer resin is a PVC resin having a K value of from 55 to 65.

3. The composition of Claim 1, wherein the amount of vinyl chloride polymer is from 85 to 95 %bw of the composition.

4. The composition of Claim 1, 2 or 3, wherein the ethylene polymers are interpolymers of ethylene having polymerized therein ethylene and from 1 to 5 %bw based upon interpolymer weight of at least one of a 1-olefin monomer copolymerized therewith.

5. The composition of Claim 4, wherein the 1-olefin monomer is selected from 1-butene or 1-octene.

6. The composition of any one of the preceding claims, wherein the CPE has a chemically combined chlorine content of from 45 to 48 %bw and is present in the composition in an amount of from 5 to 25 %bw.

7. The composition of any one of the preceding claims, wherein the homopolymer of polyethylene or the ethylene polymer has a particle size of from 120 to 600 microns and a particle size distribution in which more than 60 %bw of the particles have a size of from 130 to 850 microns.

8. An aqueous slurry process for preparing a CPE resin which comprises: (a) adding gaseous chlorine at a constant flow rate to an agitated and heated aqueous suspension of a particulate dispersant, a surfactant and a polymeric resin selected from a homopolymer of ethylene, ethylene polymers or mixtures thereof, to provide a partially chlorinated polymer having a chemically combined chlorine content of from 10 to 25 %bw of polymer, the suspension being heated from an initial chlorination temperature of 100°C to a final chlorination temperature of from 116° to 128°C; and (b) continuing the flow of gaseous chlorine at the constant flow rate while maintaining the temperature of the suspension at the final chlorination to provide a final chemically combined chlorine content of from 43 to 50 %bw of polymer.

9. The process of Claim 8, wherein the partially chlorinated polymer has a chemically combined chlorine content of from 15 to 20 %bw of polymer, and the final chlorine content is from 45 to 48 %bw of polymer.

10. The process of Claim 8, wherein the flow rate for gaseous chlorine is from 5 to 10 kg/hr.

European Patent
Office

EUROPEAN SEARCH REPORT

Application Number

EP 89 10 9430

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,Y | GB-A-1 113 138 (ALLIED CHEMICAL CORP.)<br>* Claims; page 1, lines 39-57 *<br>--- | 1-10 | C 08 F 8/22<br>C 08 L 27/06 //<br>(C 08 L 27/06<br>C 08 L 23:28 ) |
| D,Y | US-A-3 291 863 (H.-H. FREY et al.)<br>* Claims; example 1 *<br>--- | 1-10 | |
| D,Y | US-A-4 562 224 (W. BUSCH et al.)<br>* Claims; column 5, line 14 - column 6, line 51; example 1 *<br>----- | 1-10 | |
| | | | TECHNICAL FIELDS SEARCHED (Int. Cl.4)<br><br>C 08 F<br>C 08 L |

The present search report has been drawn up for all claims

| Place of search | Date of completion of the search | Examiner |
|---|---|---|
| THE HAGUE | 04-09-1989 | DE LOS ARCOS Y VELAZQUEZ |